# EUROPEAN PATENT APPLICATION

(11) **EP 4 822 520 A1**
(43) Date of publication of application: **14.10.2026**
(21) Application number: 25192447.8
(22) Date of filing: 29.07.2025
(51) Int. Cl.: G06F 7/58, G09C 1/00, H04L 9/08

(54) **METHOD OF FABRICATING PHYSICALLY UNCLONABLE FUNCTION (PUF) DEVICE AND METHOD OF GENERATING RANDOM BITS BY USING PUF DEVICE**

(30) Priority: 07.04.2025 KR 20250044661
(71) Applicant: Hyundai Motor Company, Seoul 06797 (KR); Kia Corporation, Seoul 06797 (KR); Korea Advanced Institute of Science and Technology, Daejeon 34141 (KR)
(72) Inventor: LEE, Ji-Sung, 18280 Hwaseong-si, Gyeonggi-do (KR); PARK, Byong Guk, 34141 Daejeon (KR); PARK, Yeon Su, 34141 Daejeon (KR)
(74) Representative: Viering, Jentschura & Partner mbB Patent- und Rechtsanwälte

(57) **Abstract**

A method of fabricating a physically unclonable function (PUF) device includes fabricating a PUF device including a structure in which a ferromagnetic layer and a nonmagnetic layer are disposed, and controlling magnetic anisotropy of the ferromagnetic layer and forming a random magnetic domain in the ferromagnetic layer, based on application of a voltage to the PUF device.

## Description

### TECHNICAL FIELD

The present disclosure relates to a method of fabricating a physically unclonable function (PUF) device and a method of generating random bits by using the PUF device,

### BACKGROUND

As vehicle electronic components have become increasing sophisticated, vehicle control has rapidly transitioned from conventional mechanical systems to electronic drive-by-wire systems. This shift has made the security of in-vehicle electronic platforms a critical concern.

With ongoing advancements in information and communication technologies, such as the Internet of Things (IoT), the mass production of autonomous vehicles is expected in the near future. However, this development has amplified security concerns surrounding autonomous driving systems, particularly in the context of vehicle-to-everything (V2X). Without reliable protection against external attacks, these systems may pose serious risks to passenger or pedestrian safety.

In response to these challenges, hardware-based security solutions, offering greater robustness than conventional software-based approaches, are gaining attention. The present disclosure is related to a memory device that can serve as a foundational element in addressing such security concerns.

### SUMMARY

The present disclosure is directed to a physically unclonable function (PUF) device featuring physical unclonability and reproducibility, and a method of fabricating the PUF device by using magnetic anisotropy control technologies.

According to an aspect of the present disclosure, a method of fabricating a physically unclonable function (PUF) device can include fabricating a PUF device comprising a structure in which a ferromagnetic layer and a nonmagnetic layer are disposed, and switching magnetic anisotropy of the ferromagnetic layer and forming a random magnetic domain in the ferromagnetic layer, based on application of a voltage to the PUF device.

In some implementations, forming a random magnetic domain in the ferromagnetic layer can include applying a first voltage to the PUF device, and applying a second voltage different from the first voltage to the PUF device, after the first voltage is applied to the PUF device. In some examples, the first voltage and the second voltage can be of opposite polarities.

In some examples, an electric field can have a strength of 2 to 5 megavolts per centimeter (MV/cm) during the application of the first voltage and the second voltage. In some examples, the first voltage and the second voltage can be applied while the PUF device is at a temperature between 100°C and 200°C.

In some implementations, a magnetization state of the ferromagnetic layer can be switched, based on the first voltage being applied to the PUF device, from perpendicular magnetic anisotropy to in-plane magnetic anisotropy, and a magnetization state of the ferromagnetic layer can be, based on the second voltage being applied to the PUF device, switched from in-plane magnetic anisotropy to perpendicular magnetic anisotropy to thereby form a random magnetic domain in the ferromagnetic layer. In some implementations, the method can further include , after fabricating the PUF device, heat-treating the PUF device at 200°C to 300°C.

According to another aspect of the present disclosure, a method of generating random bits by using a physically unclonable function (PUF) device can include fabricating a PUF device comprising a structure in which a ferromagnetic layer and a nonmagnetic layer are disposed, switching magnetic anisotropy of the ferromagnetic layer and forming a random magnetic domain in the ferromagnetic layer, based on application of a voltage to the PUF device, measuring the random magnetic domain by using a magneto-optical Kerr effect (MOKE) microscope, and converting a pattern of the random magnetic domain into a digital image and generating random bits.

In some implementations, generating random bits can include comparing a grayscale value of the digital image with a threshold to generate a digital signal by distinguishing whether the grayscale value is above or below the threshold. In some implementations, the method can further include generating a new random magnetic domain pattern and new random bits by sequentially repeating processes including (i) forming a random magnetic domain, (ii) measuring the random magnetic domain, and (iii) generating random bits.

In some implementations, forming a random magnetic domain in the ferromagnetic layer can include applying a first voltage to the PUF device, and applying a second voltage different from the first voltage to the PUF device, after the first voltage is applied to the PUF device. In some examples, the first voltage and the second voltage can be of opposite polarities.

In some implementations, a magnetization state of the ferromagnetic layer can be, based on the first voltage being applied to the PUF device, switched from perpendicular magnetic anisotropy to in-plane magnetic anisotropy, and a magnetization state of the ferromagnetic layer can be, based on the second voltage being applied to the PUF device, switched from in-plane magnetic anisotropy to perpendicular magnetic anisotropy to thereby form a random magnetic domain in the ferromagnetic layer. In some implementations, the method can further include, after fabricating the PUF device, heat-treating the PUF device at 200°C to 300°C.

The present disclosure can be utilized as a magnetic material-based physically unclonable function (PUF) device by controlling magnetic anisotropy of a ferromagnetic layer through a voltage effect to enable the generation of a random magnetic domain.

The random magnetization arrangement formed by a method of the present disclosure results in a different pattern with each attempt. Accordingly, when the method is combined with a method of manufacturing a device by using physical and chemical means and reading a magnetization direction (or properties dependent on the magnetization direction) of each device by using electrical and optical means, the present disclosure can be applied as a hardware-based security device.

Magnetic anisotropy of a magnetic material can be controlled by an externally applied voltage, and the variation characteristics of the magnetic anisotropy can be controlled by conditions such as the applied voltage magnitude, application duration, and temperature, thereby enabling the implementation of a PUF device by using an electrical means.

Since the magnetization direction may be read using an optical measurement method, a large volume of bit information may be generated and detected more easily, and the number of security bits may be increased, thereby providing more security against an external hacking attack.

The PUF device exhibits entropy close to 1 and an inter-Hamming distance approaching 0.5, thereby ensuring the randomness and uniqueness for a security device.

In addition, the PUF device can be combined with a magnetic tunnel junction-based MRAM device, thereby enabling application not only in a security device but also in various other magnetic material-based devices.

### BRIEF DESCRIPTION OF THE DRAWINGS

FIG. 1 is a diagram illustrating an example of a method of fabricating a physically unclonable function (PUF) device.
FIG. 2 a diagram illustrating an example of a PUF device.
FIG. 3 is a diagram illustrating a schematic cross-sectional view of the PUF device.
FIGS. 4 to 6 are diagrams illustrating example of the results of measuring anomalous Hall resistance (RH) of the PUF device before and after magnetic anisotropy control.
FIG. 7 is a diagram illustrating a state in which a magneto-optical Kerr effect (MOKE) microscope performs measurement on a device.
FIGS. 8 to 10 are diagrams illustrating examples of the results of measuring the MOKE after applying a voltage to the device.
FIG. 11 is a diagram illustrating an example of the result of measuring a magnetic domain pattern by using the MOKE.
FIG. 12 is a diagram illustrating an example of digital signals obtained by converting the result of FIG. 11.
FIG. 13 is a diagram illustrating an example of a distribution of grayscale values of pixels.
FIG. 14 is a diagram illustrating an example of digital signals obtained by converting the magnetic domain pattern measured using the MOKE, with adjustment of a pixel mask size.
FIG. 15 is a diagram illustrating an example of patterns of 32 different PUF devices.
FIG. 16 is a diagram illustrating an example of an average entropy value of the 32 devices in FIG. 15.
FIG. 17 is a diagram illustrating an example of inter-Hamming distances between the 32 devices in FIG. 15.
FIG. 18 is a diagram illustrating an example of the device.
FIGS. 19 to 21 are diagrams illustrating an example of the results of measuring the MOKE before and after applying a voltage to the device shown in FIG. 18.
FIG. 22 is a diagram illustrating an example of the result of measuring a magnetic domain pattern of the device in FIG. 18 using the MOKE.
FIG. 23 is a diagram illustrating an example of digital signals obtained by converting the result of FIG. 22.
FIG. 24 is a diagram illustrating an example of 18 different patterns of the device in FIG. 18.
FIG. 25 is a diagram illustrating an example of an average entropy value of the 18 patterns in FIG. 24.
FIG. 26 is a diagram illustrating an example of inter-Hamming distances for the 18 patterns in FIG. 24.

### DETAILED DESCRIPTION

The present disclosure introduces the basic concept of a device that utilizes a random distribution of magnetization within a thin film of magnetic material.

Specifically, the present disclosure describes a technology for forming a randomly distributed magnetization pattern by electrically controlling magnetic anisotropy. This technology relates to a physically unclonable function (PUF) device, which can be utilized for a random number generation or as a PUF-based security solution, and a method of fabricating such PUF device.

In addition, a magnetization state can be measured using a magneto-optical Kerr effect (MOKE) microscope, and the measured magnetization state can then be converted into a digital signal to form a PUF device.

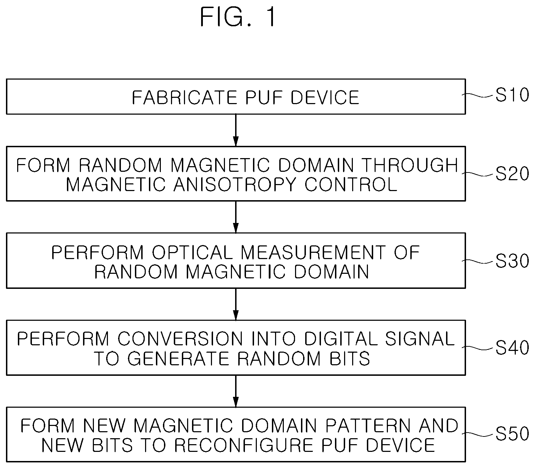

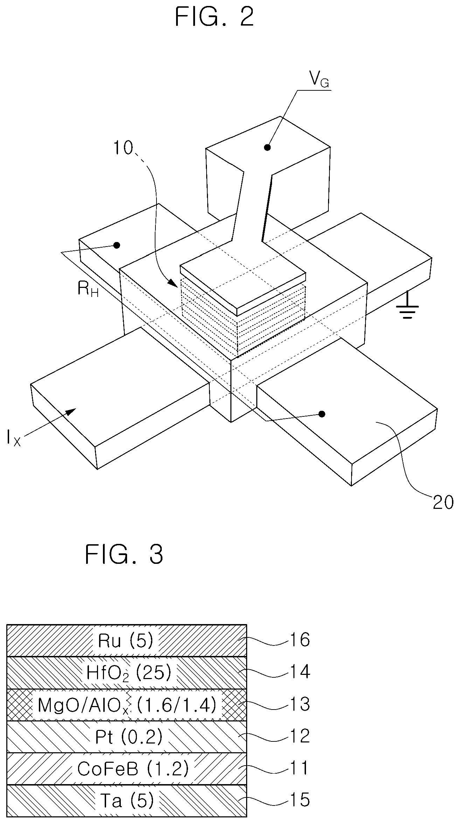

FIG. 1 is a diagram illustrating an example of a method of fabricating a physically unclonable function (PUF) device. FIG. 2 is a diagram illustrating an example of a PUF device. FIG. 3 is a diagram illustrating a schematic cross-sectional view of an example of the PUF device.

A method of fabricating an exemplary PUF device and a method of generating random bits by using the PUF device will be described below with reference to FIGS. 1 to 3.

A PUF device 10 can include a ferromagnetic layer 11, a nonmagnetic layer 12, which is a thin layer of 1 nm or less deposited on the ferromagnetic layer 11, and an insulating layer 13, which is deposited on the nonmagnetic layer 12. In addition, as depicted in FIG. 3, a gate oxide layer 14 can be deposited on the insulating layer 13, and a lower electrode 15 and an upper electrode 16 can be deposited and formed.

The ferromagnetic layer 11 can be CoFeB, Co, Ni, Fe, alloy of the same, or the like; and the nonmagnetic layer 12 can be platinum (Pt), titanium (Ti), tantalum (Ta), tungsten (W), palladium (Pd), chromium (Cr), or the like.

The insulating layer 13 can be an oxide such as MgO, AlOx, TiOx, or TaOx; the lower electrode 15 can be tantalum (Ta), platinum (Pt), titanium (Ti), tungsten (W), palladium (Pd), chromium (Cr), or the like; the upper electrode 16 can be ruthenium (Ru). The numbers in parentheses in FIG. 3 can indicate thickness values in nanometers (nm).

In addition, the gate oxide layer 14 can be HfO₂ for the following reasons.

In a HM/FM/oxide structure, perpendicular magnetic anisotropy can arise from FM-O bonding at the FM/oxide interface; and when an electric field is applied, the anisotropy can be controlled by adjusting the oxidation condition or oxygen ion concentration at the interface. Accordingly, an oxide that effectively supplies oxygen ions to the interface when a gate voltage is applied is suitable as a gate oxide. In addition, even under repeated electric field application, the gate voltage can be stably applied, and stability can be ensured to block degradation of the structure and properties of the oxide.

In a conventional spin-orbit torque (SOT) device, applying an electric field allows adjustment of the switching current by modulating the strength of the perpendicular magnetic anisotropy, while maintaining its perpendicular orientation. However, the present disclosure involves a complete shift from perpendicular magnetic anisotropy to in-plane magnetic anisotropy, or vice versa, which calls for a stronger electric field effect (voltage-controlled magnetic anisotropy, VCMA) than conventional approaches.

ZrO₂, TiO₂, TaOx, AlOx, and GaOx can also be applied, in addition to HfO₂.

The present disclosure introduces the basic concept of a device that utilizes a random distribution of magnetization within a thin film of magnetic material, and relates to a security device using a technology for forming a random magnetic domain pattern by applying a voltage to a nonmagnetic/ferromagnetic/insulating layer structure to control the magnetic anisotropy of the ferromagnetic layer.

First, to fabricate a device, a thin film having a Ta/CoFeB/Pt/MgO/AlOx structure can be deposited on a Si substrate 20 by using a sputtering method, as shown in the example.

To ensure initial perpendicular magnetic anisotropy, heat treatment can be performed at 200°C to 300°C, preferably at 250°C for 30 minutes using a heat treatment apparatus.

In addition, to measure magnetic anisotropy, a Hall bar device (15 µm in length and 5 µm in width) can be fabricated by using photolithography and ion beam etching methods; and a PUF device capable of applying a voltage to the magnetic layer can be fabricated by etching in a circular or rectangular pattern with a diameter of 4 µm down to the CoFeB layer, which is a magnetic layer, and then depositing a gate oxide layer of HfO₂ and an upper electrode of Ru on the device (S10).

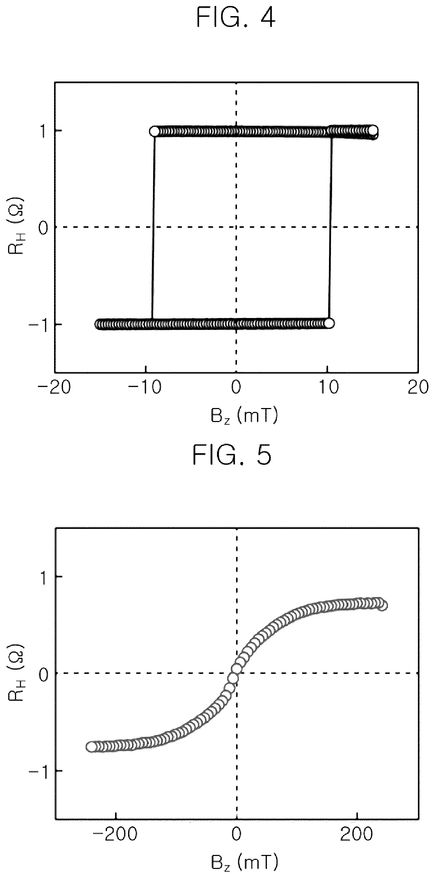

FIGS. 4 to 6 are diagrams illustrating an example of the results of measuring anomalous Hall resistance (RH) of a sample, and the results provide information on the direction of the magnetic anisotropy of the ferromagnetic CoFeB layer.

FIG. 4 shows the results of measuring the RH of an initial device immediately after deposition, and the results show that the device has perpendicular magnetic anisotropy. For example, RH values of ±1 indicate magnetization directions of ±z, that is, UP and DOWN states, respectively.

FIG. 5 shows RH results obtained after applying a first voltage-for example, a voltage of -7 V (2.5 MV/cm) for 4 seconds-to the device at a temperature of 125°C, and the results show that the perpendicular magnetic anisotropy of the ferromagnetic layer is controlled to shift to in-plane magnetic anisotropy.

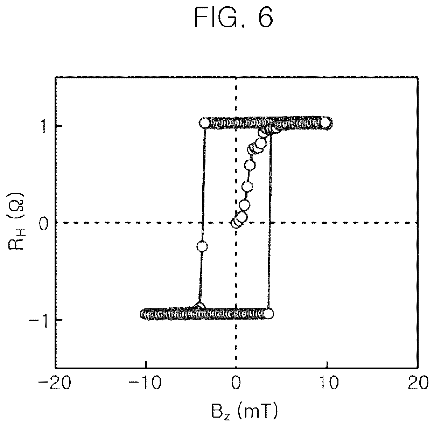

Next, when a second voltage of the opposite sign-for example, +8 V (2.8 Mv/cm) for 8 seconds-is applied to the device at a temperature of 125°C, the perpendicular magnetic anisotropy can be restored as shown in FIG. 6.

However, immediately after applying +8V, the result that RH = 0 in the absence of an external magnetic field shows that a net value of perpendicular magnetization is zero when the magnetic anisotropy is restored from in-plane magnetic anisotropy to perpendicular magnetic anisotropy.

That is, the areas of the magnetic domains in the ferromagnetic layer with magnetization in Up and Down directions can be identical and cancel each other out.

In this way, a random magnetic domains can be formed through magnetic anisotropy control (S20).

The magnetic anisotropy control can be performed using a voltage application device.

In some implementations, the magnetic anisotropy control by an electric field occurs due to the migration of oxygen ions, and thus the conditions for applying the electric field, i.e., temperature, voltage magnitude, duration, etc. can be interrelated. For example, when the temperature is low, a greater voltage magnitude and a longer duration of electric field application may be required. Accordingly, there is a suitable set of electric field application conditions for device implementation.

An upper limit of the electric field that may be applied to the gate oxide can be approximately 5 Mv/cm. Applying an electric field beyond 5 Mv/cm can cause degradation of the oxide, and at an electric field below 2 MV/cm, the VCMA effect can be small. Accordingly, in some implementations, the device can be operated within a range of 2-5 MV/cm.

Increasing the temperature for electric field application to a higher temperature can reduce the electric field at which the VCMA effect occurs and shorten the duration. However, when the temperature becomes 250°C or higher, interdiffusion at the HM/FM/oxide interface may deteriorate the magnetic properties. Accordingly, in some implementations, the device can be operated at a temperature between 100°C and 200°C.

In addition, the duration of electric field application can be determined by the temperature and the electric field strength; and the conditions can include a temperature in the range of 100°C -200°C, an electric field strength of 2-3 MV/cm, and a duration of a few seconds to several tens of seconds.

Thus, applying a voltage to the structure of the device can switch the magnetic anisotropy of the ferromagnetic layer from perpendicular magnetic anisotropy to in-plane magnetic anisotropy or, conversely, from in-plane magnetic anisotropy to perpendicular magnetic anisotropy. Accordingly, when an electric field is applied to switch from a perpendicular magnetic anisotropy state to an in-plane magnetic anisotropy state, and then a voltage of the opposite sign is applied to restore the perpendicular magnetic anisotropy state, a random magnetic domain pattern can be formed with equal probabilities of magnetization in the +z (Up) and -z (Down) directions.

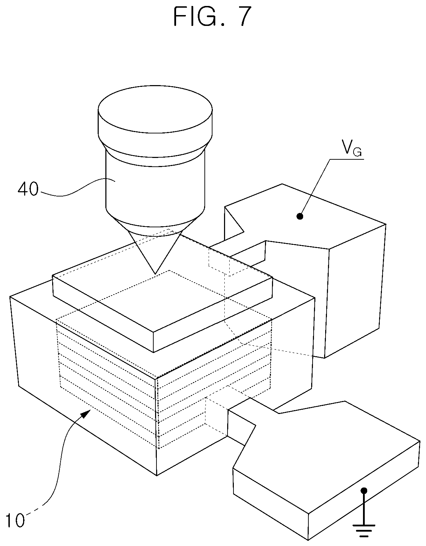

Next, as shown in FIG. 7, the random magnetic domain pattern, formed by applying a voltage to the fabricated PUF device, can be measured using a magneto-optical Kerr effect (MOKE) microscope 40 (S30).

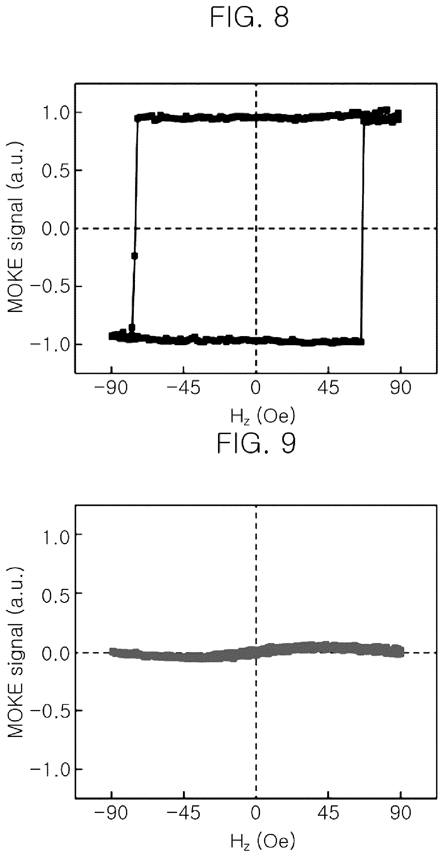

FIGS. 8 to 10 show examples of the results of measuring the MOKE before and after voltage application, and the results can provide information regarding the direction of the magnetic anisotropy of the ferromagnetic CoFeB layer. It can also be observed that the results align with those presented in FIGS. 4 to 6.

That is, FIG. 8 shows the measurement results of an initial device immediately after deposition, and the results show that the device can have perpendicular magnetic anisotropy. Here, MOKE signals of ±1 indicate magnetization directions of ±z, that is, UP and DOWN states, respectively.

FIG. 9 shows results after applying a voltage of -7 V (2.5 MV/cm) to the device for 4 seconds at a temperature of 125°C, and the results show that the perpendicular magnetic anisotropy of the ferromagnetic layer can be controlled to shift to in-plane magnetic anisotropy.

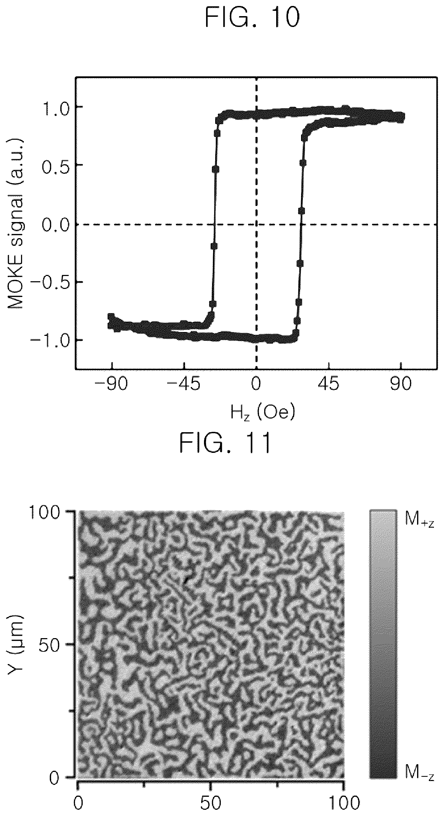

Next, when a voltage of the opposite sign, +8 V (2.8 MV/cm), is applied to the device for 8 seconds at a temperature of 125°C, the perpendicular magnetic anisotropy can be restored as shown in FIG. 10.

Next, the random magnetic domain of the device can be converted into a digital signal to generate random bits (S40).

FIG. 11 shows the result of measuring a magnetic domain pattern by using the MOKE, where the light gray portion can indicate a state where the magnetization direction is UP, and the black portion can indicate a state where the magnetization direction is DOWN.

That is, FIG. 11 shows that the magnetic domains with different magnetization directions can be randomly distributed.

By applying an electric field, a random magnetic domain pattern can be formed in the device structure of the present disclosure; and, in some implementations, the pattern can be utilized to configure a PUF device.

That is, the random magnetic domain pattern can be converted into a digital image composed of 1s and 0s, and the digital image can be utilized as security bits. The conversion can be performed by a digital image conversion device.

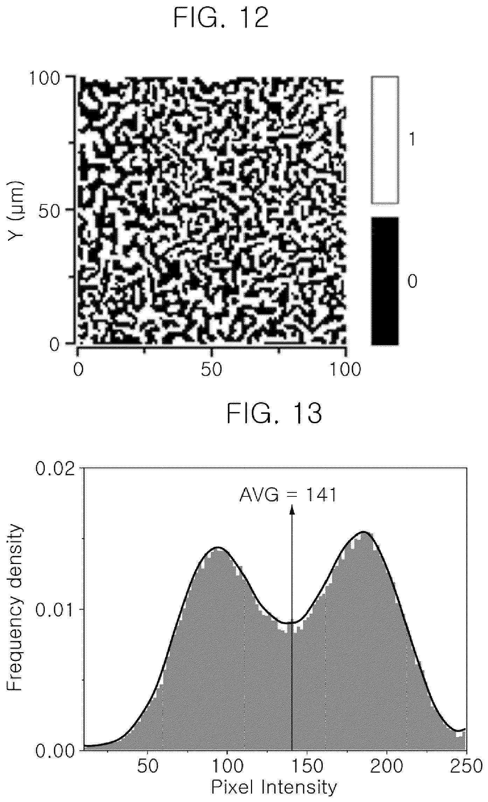

In some implementations, as shown in FIG. 12, the conversion into a digital signal can be performed using a method in which a value of 1 is assigned if the average grayscale value within a mask of size n×n pixels (n:integer) is greater than a threshold, and a value of 0 is assigned if the average grayscale value is less than the threshold.

For example, the threshold can be a median of a bimodal distribution that appears in the grayscale distribution shown in FIG. 13, or the average grayscale of the entire image.

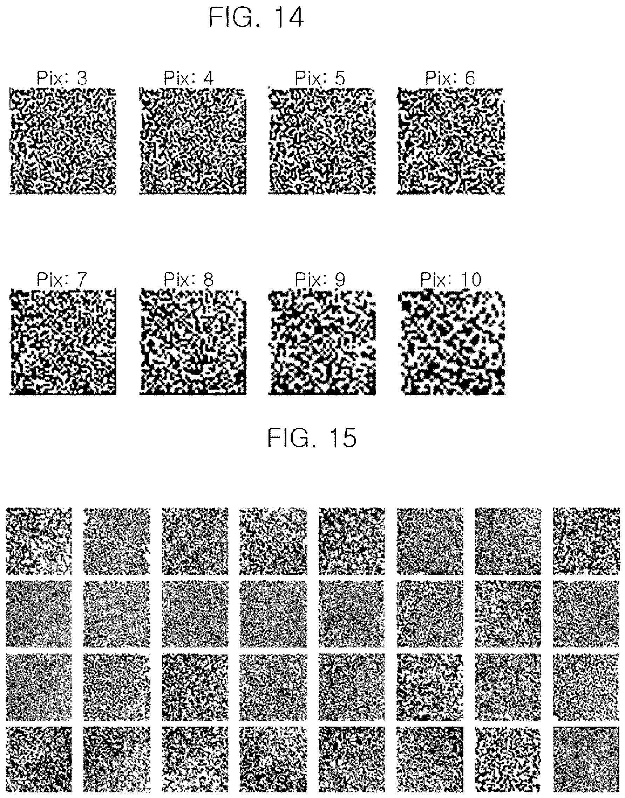

In addition, the shape of a bit image can be changed by adjusting the size of a pixel mask, as shown in FIG. 14.

To evaluate the PUF performance of the security bits fabricated in this manner, PUF patterns can be obtained from 32 different devices, as shown in FIG. 15. For example, by repeating the previous process, a new magnetic domain pattern and new bits can be formed, thereby reconfiguring the PUF device (S50).

Key characteristics of the PUF may be randomness, where the 0s and 1s are randomly distributed, and uniqueness, where different devices have different bits.

Entropy, which is an indicator of randomness, can be expressed as *E*=-[*plog*₂*p+*(1*-p*)log₂(1*-p*)], where p represents the probability that a bit has a value of 1 or 0.

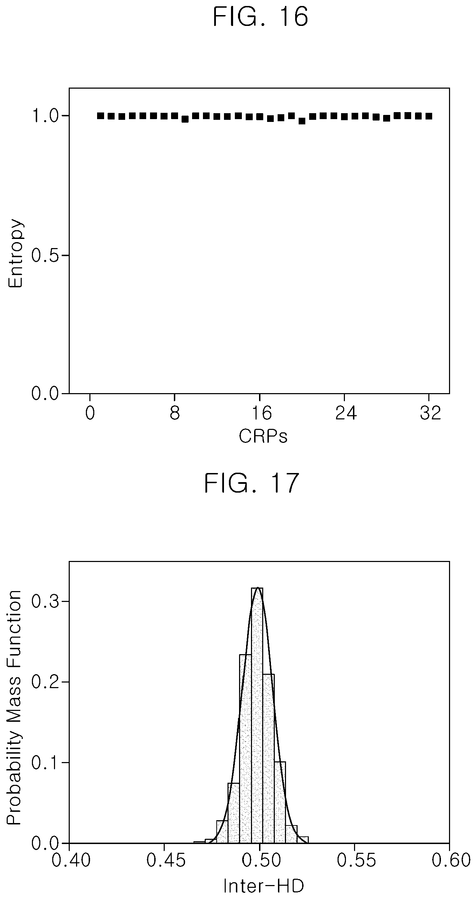

An ideal value of the entropy is 1, and the average value of the 32 devices fabricated in the present disclosure is 0.9969, which is very close to the ideal value, as shown in FIG. 16.

An inter-Hamming distance, which is an indicator of uniqueness, can be an indicator obtained by comparing bits between devices; and an ideal value for the inter-Hamming distance can be 0.5.

The values obtained from the implementations of the present disclosure can have an average of 0.499, which is very close to the ideal value, with a standard deviation of 0.0079, as shown in FIG. 17.

The size of the bit image obtained using a 3×3 pixel mask can be 11,664 bits, and for example, effective encoding capacity, which represents the number of possible bit images, is expressed as: ${\left(Number of possible bits states\right)}^{\frac{μ \left(1-μ\right)}{{σ}^{2}}}$.

The effective encoding capacity can be obtained using the standard deviation based on a normal distribution of Hamming distances. Here, *µ* can refer to the average of Hamming distances, and *σ* can refer to the standard deviation of Hamming distances.

In some implementations, the effective encoding capacity may be a very large value of 2⁴⁰⁰⁶, which may indicate strong resistance to hacking, and the very large encoding capacity may indicate being safe from an external hacking attack.

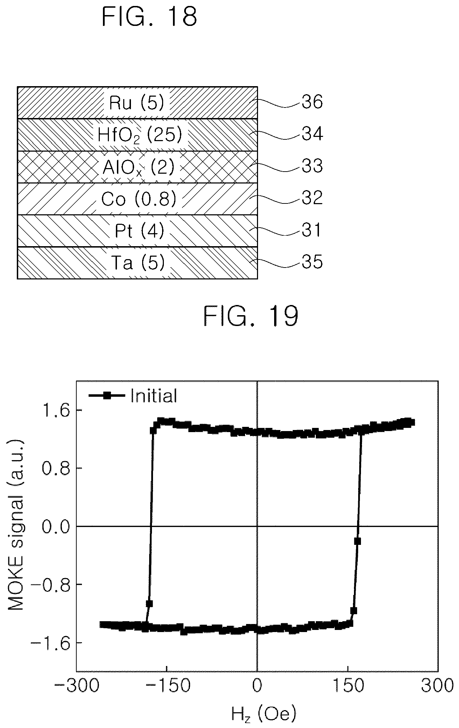

Next, FIG. 18 shows an example of the device, and the VCMA-PUF characteristics will be confirmed in the example of the device.

First, as illustrated in FIG. 18, a thin film having a structure of a lower electrode 35 (Ta), a nonmagnetic layer 31 (Pt), a ferromagnetic layer 32 (Co), an insulating layer 33 (AlOx), a gate oxide layer 34 (HfO₂), and an upper electrode 36 (Ru) can be deposited on a Si substrate by using a sputtering method.

The device can have perpendicular magnetic anisotropy without post-heat treatment.

A voltage-controlled magnetic anisotropy technology can be introduced into a 100 *µ*m×100 *µ*m device, and a device can be fabricated in which a random magnetic domain pattern, formed by voltage application, can be measured using the MOKE microscope.

FIGS. 19 to 21 show an example of the results of measuring the MOKE before and after voltage application, and the results may provide information on the direction of the magnetic anisotropy of the ferromagnetic Co layer.

FIG. 19 shows an example of the measurement results of an initial device immediately after deposition, and the results show that the device can have perpendicular magnetic anisotropy. Here, MOKE signal values of ±1 can indicate magnetization directions of ±z, that is, UP and DOWN states, respectively.

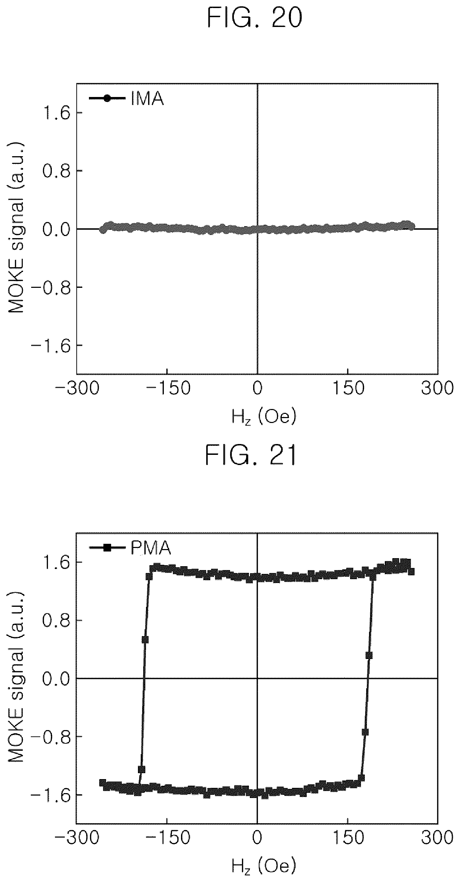

FIG. 20 shows results obtained after applying a voltage of +5 V (1.8 MV/cm) to the device for 30 seconds at a temperature of 175°C, and the results show that the perpendicular magnetic anisotropy of the ferromagnetic layer can be controlled to shift to in-plane magnetic anisotropy.

Next, when a voltage of the opposite sign, -4 V (1.4 MV/cm), is applied to the device for 2 seconds at a temperature of 175°C, the perpendicular magnetic anisotropy can be restored as shown in FIG. 21.

Next, the random magnetic domain of the device can be converted into a digital signal to generate random bits.

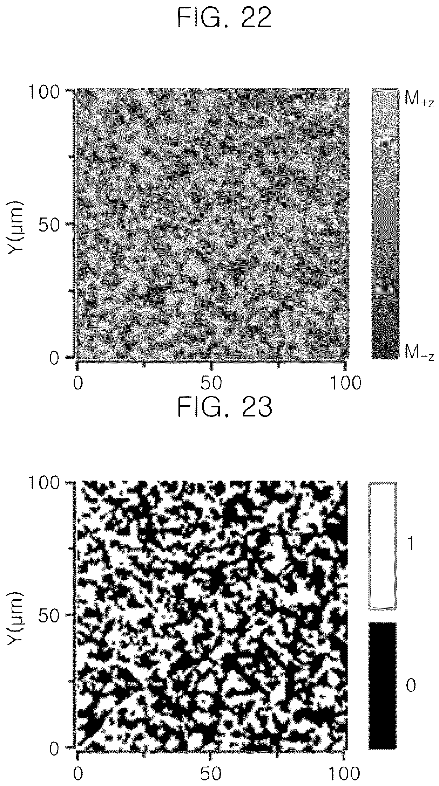

FIG. 22 shows the result of measuring a magnetic domain pattern by using the MOKE, where the light gray portion can indicate a state where the magnetization direction is UP, and the black portion can indicate a state where the magnetization direction is DOWN.

FIG. 22 shows that the magnetic domains with different magnetization directions can be randomly distributed immediately after the perpendicular magnetic anisotropy is restored in the Pt/Co structure too.

By applying an electric field, a random magnetic domain pattern can be formed in the device structure; and, in some implementations, the pattern can be utilized to configure a PUF device.

That is, the random magnetic domain pattern can be converted into a digital image composed of 1s and 0s, and the digital image can be utilized as security bits.

FIG. 23 shows that the conversion into a digital signal can be performed using a method in which a value of 1 is assigned if the average grayscale value within a mask of size n×n pixels (n:integer) is greater than a threshold, and a value of 0 is assigned if the average grayscale value is greater than the threshold.

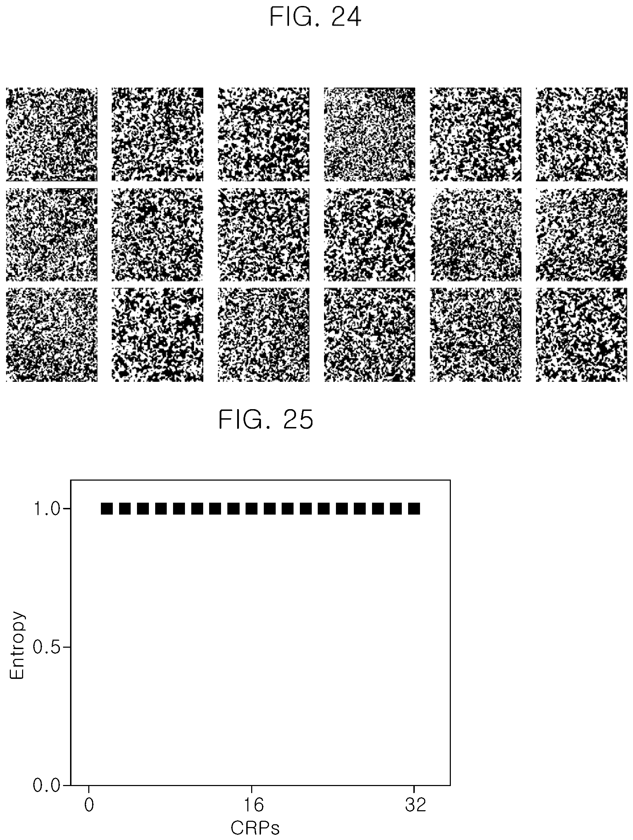

To evaluate the PUF performance of the security bits fabricated in this manner, 18 different security bit patterns can also be obtained through repeated voltage application at least 18 times in a device having the same Pt/Co structure, as shown in FIG. 24. That is, if the security device is exposed to hacking or the like due to reconfigurable characteristics, new security bits can be generated.

FIGS. 25 and 16 show an example of the results of evaluating 18 different security bits generated by the device.

As in the evaluation in the previous implementations, the entropy, which is an indicator of randomness, and the inter-Hamming distance, which is an indicator of uniqueness, can be determined.

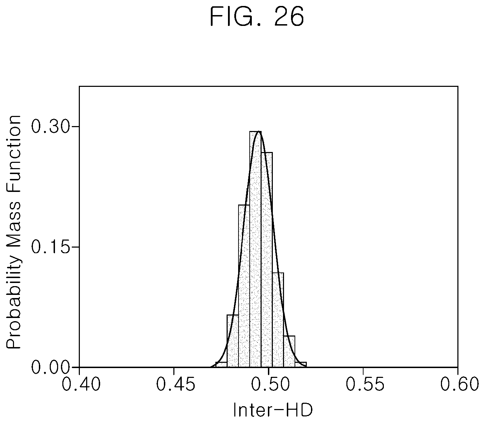

The entropy can be 0.9995 on average, as shown in FIG. 25; and the Hamming distance can be 0.495 on average, which is very close to an ideal value, with a standard deviation of 0.0077, as shown in FIG. 26.

This shows that a security pattern within the same PUF device can be reconfigurable. That is, it shows the capability to generate new security bits when security bits are exposed to the outside.

## Claims

1. A method of fabricating a physically unclonable function (PUF) device, the method comprising:
fabricating a PUF device comprising a structure in which a ferromagnetic layer and a nonmagnetic layer are disposed; and
switching magnetic anisotropy of the ferromagnetic layer and forming a random magnetic domain in the ferromagnetic layer, based on application of a voltage to the PUF device.

2. The method of claim 1, wherein forming a random magnetic domain in the ferromagnetic layer comprises:
applying a first voltage to the PUF device; and
applying a second voltage different from the first voltage to the PUF device, after the first voltage is applied to the PUF device.

3. The method of claim 2, wherein the first voltage and the second voltage are of opposite polarities.

4. The method of claim 2 or 3, wherein an electric field has a strength of 2 to 5 megavolts per centimeter (MV/cm) during the application of the first voltage and the second voltage.

5. The method of anyone of claims 2-4, wherein the first voltage and the second voltage are applied while the PUF device is at a temperature between 100°C and 200°C.

6. The method of anyone of claims 2-5, wherein:
a magnetization state of the ferromagnetic layer is switched, based on the first voltage being applied to the PUF device, from perpendicular magnetic anisotropy to in-plane magnetic anisotropy, and
a magnetization state of the ferromagnetic layer is, based on the second voltage being applied to the PUF device, switched from in-plane magnetic anisotropy to perpendicular magnetic anisotropy to thereby form a random magnetic domain in the ferromagnetic layer.

7. The method of anyone of claims 2-6, further comprising, after fabricating the PUF device, heat-treating the PUF device at 200°C to 300°C.

8. A method of generating random bits by using a physically unclonable function (PUF) device, the method comprising:
fabricating a PUF device comprising a structure in which a ferromagnetic layer and a nonmagnetic layer are disposed;
switching magnetic anisotropy of the ferromagnetic layer and forming a random magnetic domain in the ferromagnetic layer, based on application of a voltage to the PUF device;
measuring the random magnetic domain by using a magneto-optical Kerr effect (MOKE) microscope; and
converting a pattern of the random magnetic domain into a digital image and generating random bits.

9. The method of claim 8, wherein generating random bits comprises:
comparing a grayscale value of the digital image with a threshold to generate a digital signal by distinguishing whether the grayscale value is above or below the threshold.

10. The method of claim 8 or 9, further comprising:
generating a new random magnetic domain pattern and new random bits by sequentially repeating processes including (i) forming a random magnetic domain, (ii) measuring the random magnetic domain, and (iii) generating random bits.

11. The method of anyone of claims 8-10, wherein forming a random magnetic domain in the ferromagnetic layer comprises:
applying a first voltage to the PUF device; and
applying a second voltage different from the first voltage to the PUF device, after the first voltage is applied to the PUF device.

12. The method of claim 11, wherein the first voltage and the second voltage are of opposite polarities.

13. The method of claim 11 or 12, wherein:
a magnetization state of the ferromagnetic layer is, based on the first voltage being applied to the PUF device, switched from perpendicular magnetic anisotropy to in-plane magnetic anisotropy, and
a magnetization state of the ferromagnetic layer is, based on the second voltage being applied to the PUF device, switched from in-plane magnetic anisotropy to perpendicular magnetic anisotropy to thereby form a random magnetic domain in the ferromagnetic layer.

14. The method of anyone of claims 11-13, further comprising, after fabricating the PUF device, heat-treating the PUF device at 200°C to 300°C.

## Amended claims

### Amended claims in accordance with Rule 137(2) EPC.

1. A method of fabricating a physically unclonable function (PUF) device, the method comprising:
fabricating a PUF device comprising a structure in which a ferromagnetic layer and a nonmagnetic layer are disposed; and
switching magnetic anisotropy of the ferromagnetic layer and forming a random magnetic domain in the ferromagnetic layer, based on application of a voltage to the PUF device.

2. The method of claim 1, wherein forming a random magnetic domain in the ferromagnetic layer comprises:
applying a first voltage to the PUF device; and
applying a second voltage different from the first voltage to the PUF device, after the first voltage is applied to the PUF device.

3. The method of claim 2, wherein the first voltage and the second voltage are of opposite polarities.

4. The method of claim 2 or 3, wherein an electric field has a strength of 2 to 5 megavolts per centimeter (MV/cm) during the application of the first voltage and the second voltage.

5. The method of anyone of claims 2-4, wherein the first voltage and the second voltage are applied while the PUF device is at a temperature between 100°C and 200°C.

6. The method of anyone of claims 2-5, wherein:
a magnetization state of the ferromagnetic layer is switched, based on the first voltage being applied to the PUF device, from perpendicular magnetic anisotropy to in-plane magnetic anisotropy, and
a magnetization state of the ferromagnetic layer is, based on the second voltage being applied to the PUF device, switched from in-plane magnetic anisotropy to perpendicular magnetic anisotropy to thereby form a random magnetic domain in the ferromagnetic layer.

7. The method of anyone of claims 2-6, further comprising, after fabricating the PUF device, heat-treating the PUF device at 200°C to 300°C.

8. A method of generating random bits by using a physically unclonable function (PUF) device manufactured according to claim 1, the method comprising:
measuring the random magnetic domain by using a magneto-optical Kerr effect (MOKE) microscope; and
converting a pattern of the random magnetic domain into a digital image and generating random bits.

9. The method of claim 8, wherein generating random bits comprises:
comparing a grayscale value of the digital image with a threshold to generate a digital signal by distinguishing whether the grayscale value is above or below the threshold.

10. The method of claim 8 or 9, further comprising:
generating a new random magnetic domain pattern and new random bits by sequentially repeating processes including (i) forming a random magnetic domain, (ii) measuring the random magnetic domain, and (iii) generating random bits.

11. The method of anyone of claims 8-10, wherein forming a random magnetic domain in the ferromagnetic layer comprises:
applying a first voltage to the PUF device; and
applying a second voltage different from the first voltage to the PUF device, after the first voltage is applied to the PUF device.

12. The method of claim 11, wherein the first voltage and the second voltage are of opposite polarities.

13. The method of claim 11 or 12, wherein:
a magnetization state of the ferromagnetic layer is, based on the first voltage being applied to the PUF device, switched from perpendicular magnetic anisotropy to in-plane magnetic anisotropy, and
a magnetization state of the ferromagnetic layer is, based on the second voltage being applied to the PUF device, switched from in-plane magnetic anisotropy to perpendicular magnetic anisotropy to thereby form a random magnetic domain in the ferromagnetic layer.

14. The method of anyone of claims 11-13, further comprising, after fabricating the PUF device, heat-treating the PUF device at 200°C to 300°C.
